# EUROPÄISCHE PATENTANMELDUNG

(11) **EP 1 182 609 A1**
(43) Veröffentlichungstag der Anmeldung: **27.02.2002**
(21) Anmeldenummer: 00118475.3
(22) Anmeldetag: 25.08.2000
(51) Int. Cl.: G06N 3/063

(54) **Schaltungsanordnung zur Simulation neuronaler Netzwerke und zur positionsunabhängigen Mustererkennung**

(71) Anmelder: Bezler, Peter, 88400 Biberach (DE)
(72) Erfinder: Bezler, Peter, 88400 Biberach (DE)

(57) **Zusammenfassung**

Bei den bisher bekannten Schaltungen zur Simulation neuronaler Netzwerke wird eine Verbindung (Konnektivität) zwischen den Speicherelementen (Neuronen) der Eingangsschicht und den Speichersegmenten der Ausgangsschicht durch die Abspeicherung der Adressen der korrespondierenden Speicherelemente hergestellt. Dies erfordert den Einsatz relativ langsamer RAMs und nimmt den größten Teil der Speicherkapazität zur Abspeicherung der Adressen in Anspruch. Mit der erfindungsgemäßen Schaltung (Fig.3) wird die Konnektivität zwischen Eingangssignalen, Gewichtungsfaktoren und Ausgangsbedeutungen
- durch die Reihenfolge der Signalverarbeitung
- einer spezifischen Schaltungsstruktur
- der vorgegebenen Reihenfolge der separat abgespeicherten Gewichtungsfaktoren erzielt. Hierdurch entfällt jegliche Abspeicherung von Adressen., was zu einer wesentlichen Steigerung der Verarbeitungsgeschwindigkeit führt.

## Beschreibung

Die Erfindung betrifft eine Schaltungsanordnung zur Simulation neuronaler Netzwerke und zur positionsunabhängigen Mustererkennung

Neuronale Netze ermöglichen die Lösung von Aufgaben, die mit herkömmlichen Verfahren, wie sie in Digitalrechnern angewendet werden, nur schwer zu bewältigen sind. Probleme, die mit neuronalen Netzen gelöst werden können, sind Klassifikationsprobleme, Probleme der Mustererkennung, Zeichenerkennung, Spracherkennung, Bildverarbeitung, der kombinatorischen Optimierung usw..
Obwohl neuronale Netze diese Aufgaben wesentlich besser lösen als herkömmliche von-Neumann-Rechner, sind sie noch wenig verbreitet. Dies ist vor allem dem Umstand zuzuschreiben, dass es bislang keine in Grossserien gefertigten Bausteine gibt, welche die für die Herstellung neuronaler Netze erforderlichen Funktionen besitzen. Um dieses Problem zu umgehen, wird versucht, die Funktion neuronaler Netze unter Verwendung herkömmlicher Chips zu simulieren.

So ist in der Patentschrift des Deutschen Patentamtes mit der Nummer DE 4307 027 C2 ein speicherorientiertes neuronales Netz beschrieben, bei dem mit einer als Verzeigerung bezeichneten Adressierung die Konnektivität, d.h. die Zuordnung zwischen Eingangsneuronen und den die Gewichtungsfaktoren enthaltenden Ausgangsneuronen hergestellt wird.

Die Erfindung bezweckt, durch eine spezielle Schaltungsanordnung die Konnektivität zwischen Eingangssignal, Gewichtung und Ausgangsbedeutung ohne eine solche Adressierung (Verzeigerung) herzustellen, sodass eine erhebliche Reduzierung des Speicherbedarfs und der Einsatz sequentiell arbeitender schneller Speicher möglich ist. Außerdem besitzt die Erfindung mit einer positionsunabhängigen Mustererkennung ein Leistungsmerkmal, das einschichtige neuronale Netzwerke bisher nicht aufweisen.

Die Erfindung ist gegeben durch eine Schaltungsanordnung zur Simulation eines neuronalen Netzwerkes, und besteht aus
einem Rechenwerk,
einem Gewichtungsspeicher,
einem Ausgangsspeicher,
einer synchronen Speicheransteuerung,
die in der Weise angeordnet sind, daß
- im Rechenwerk jedes einzelne Eingangssignals während dessen Verweildauer mit sämtlichen im Gewichtungsspeicher abgelegten Gewichtungsfaktoren multipliziert (gewichtet) wird,
- das Ergebnis dieser Multiplikation zu den im Ausgangspeicher vorhandenen Werten aufsummiert wird, wobei die aktuelle Höchstsumme sowie die zweithöchste Summe mit den Kennungen der aufnehmenden Speicherelemente im Rechenwerk zwischengespeichert werden,
- durch die synchrone Speicheransteuerung eine Konnektivität zwischen Eingangssignal, Gewichtungsfaktor und Ausgangsbedeutung hergestellt wird.

Die Erfindung bringt gegenüber den bisher bekannten Simulationen neuronaler Netzwerke den Vorteil, dass alle Speicherzugriffe sequentiell erfolgen und deshalb kein Einsatz von Speichern mit wahlfreiem Speicherzugriff (RAM) erforderlich ist. Dies erlaubt den Einsatz sehr viel schnellerer Speicher, bei denen lediglich die Anfangsadresse und die Zahl der Datenelemente übergeben wird. Denkbar ist dabei auch der Einsatz zukünftiger ultraschneller Speichertechnologien wie etwa optischer oder atomarer Speicher. Eine weitere Einsparung an Verarbeitungszeit erfolgt auch dadurch, dass zur Feststellung des Gewinnerneurons keine gesonderte Abfrage der Ausgangsneuronen erforderlich ist, sondern dieses durch den bei der Summation festgehaltenen Höchstwert bereits bestimmt ist. Die mit der Erfindung zu erzielende Steigerung der Verarbeitungsgeschwindigkeit ist deshalb von größter Bedeutung, weil die für neuronale Netzwerke einschlägigen Einsatzgebiete, wie Mustererkennung, Spracherkennung etc. meist eine Echtzeitverarbeitung erfordern.
Die lediglich aus vier Hauptkomponenten bestehende Erfindung ist in ihrer Struktur äußerst klar und einfach und ermöglicht somit ohne größeren Aufwand den Einsatz mehrerer identischer Schaltungen zur Steigerung der Verarbeitungsgeschwindigkeit oder zur Simulation mehrschichtiger neuronaler Netzwerke.
Von besonderem Vorteil ist die klare Schaltungsstruktur insbesondere für die in einer speziellen Trainingsphase zu ermittelnde Einstellung der Gewichtungen. Durch die separate Speicherung der Gewichtungen einerseits und der aufsummierten Ausgangswerte andererseits sowie der permanenten Präsentierung des aktuellen Gewinnerneurons wird die optimale Einstellung der Gewichtungen erheblich erleichtert. Außerdem gewährt die Schaltung völlige Freiheit hinsichtlich der Größe der zu klassifizierenden Muster, des Formats der Eingangssignale, der Anzahl von Ausgangsbedeutungen und der Festlegung des Gewichtungsformats, wobei die Gewichtung auch negativ sein kann. Schließlich kann für die Identifizierung der Ausgangsbedeutung sowohl ein genereller als auch ein für jede Ausgangsbedeutung spezifischer Schwellwert festgelegt werden.
Die Maßnahme nach Anspruch 2 bewirkt eine partielle Parallelverarbeitung und senkt die Verarbeitungsdauer im reziproken Verhältnis zur Anzahl der eingesetzten Schaltungen.
Die Maßnahme nach Anspruch 3 ermöglicht die Simulation mehrschichtiger neuronaler Netzwerke mit all den vorgenannten Leistungsmerkmalen.
Durch die Maßnahme nach Anspruch 4 wird der Zufluss der Daten und deren Verarbeitung zeitlich entkoppelt. Dadurch ist auch eine Verarbeitung solcher Daten möglich, deren Zufluss schneller erfolgt als sie verarbeitet werden können. Außerdem erlaubt die Zwischenspeicherung eine schrittweise Bearbeitung eines Datenmusters, was bei der Einstellung der Gewichtungsfaktoren sehr vorteilhaft ist.
Die Maßnahme nach Anspruch 5 bewirkt durch eine bloße Änderung der Synchronisation und der Gewichtung eine positionsunabhängige Mustererkennung. Damit ist die für eine herkömmliche Mustererkennung notwendige genaue Positionierung des Musters entbehrlich.

Die Erfindung wird nun in einem zum Verständnis erforderlichen Umfang als Ausführungsbeispiel beschrieben. Dabei zeigt
**Fig. 1** die Struktur eines herkömmlichen neuronalen Netzes bei dem die Einheiten untereinander fest verdrahtet sind,
**Fig. 2** ein Ausführungsbeispiel für ein festverdrahtetes neuronales Netzwerk
**Fig. 3** das Blockschaltbild der erfindungsgemäßen Schaltung zur Simulation neuronaler Netzwerke,
**Fig. 4** die zeitliche Abfolge und Zuordnung der seriellen Eingangssignale zu den im Gewichtungsspeicher gespeicherten Gewichtungsfaktoren,
**Fig. 5** ein Ausführungsbeispiel für die erfindungsgemäße Schaltung zur Simulation neuronaler Netzwerke,
**Fig. 6** eine Parallelanordnung mehrerer erfindungsgemäßer Schaltungen zur Simulation eines neuronalen Netzwerkes,
**Fig. 7** die Simulation eines mehrschichtigen neuronalen Netzwerkes,
**Fig. 8** das Blockschaltbild einer erfindungsgemäßen Schaltung mit vorgeschaltetem Eingangsspeicher,
**Fig. 9** ein Ausführungsbeispiel für eine positionsunabhängige Mustererkennung

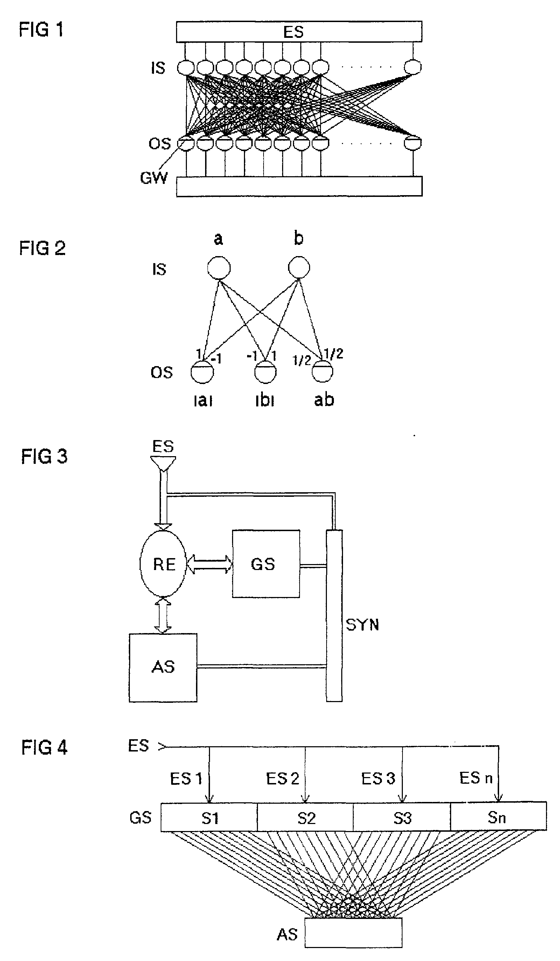

**Fig. 1** zeigt die Struktur eines fest verdrahteten einschichtigen neuronalen Netzwerkes, bei dem alle Neuronen der Inputschicht IS mit allen Neuronen der Outputschicht (OS) fest verdrahtet sind. Bei den Neuronen der Outputschicht ist jede einzelne Verbindung zu den Eingangsneuronen mit einer spezifischen Gewichtung (GW) versehen.
**Fig. 2** zeigt ein einfaches fest verdrahtetes neuronales Netz zur Klassifizierung, d.h. Decodierung von digitalen Eingangsmustern. Dabei soll die Inputschicht (IS) aus nur zwei Neuronen bestehen, denen das digitale Eingangsmuster in der Weise zugeführt wird, dass ein hoher Eingangspegel als aktiver Zustand und ein Nullpegel als inaktiver Zustand gilt. Die den Neuronen der Inputschicht (IS) zugeführten Pegel (Signale) werden von diesen an alle Neuronen der Outputschicht weitergeleitet. Die bei den Neuronen der Outputschicht eingehenden Pegel werden gewichtet. Die Gewichtung kann Werte von -1 bis +1 umfassen. In den Neuronen der Outputschicht wird eine Summation der eingehenden und gewichteten Signale vorgenommen. Jedes Neuron der Outputschicht repräsentiert eine bestimmte, den verschiedenen Eingangsmustern zugeordnete Bedeutung. Das Neuron mit dem höchsten Summationsergebnis repräsentiert die für ein bestimmtes Eingangsmuster gültige Bedeutung. Das in Fig.2 dargestellte neuronale Netz vermag eine Klassifizierung von eingangsseitig zugeführten Mustern, "a allein", "b allein" oder "a und b gemeinsam" vorzunehmen. Bei dem neuronalen Netz nach Fig.2 kann beispielsweise das für die Bedeutung "a allein" stehende Neuron keinen Höchstwert erreichen, wenn das Eingangsmuster für beide Eingänge a und b einen aktiven Wert aufweist.
**Fig. 3** zeigt das Blockschaltbild einer erfindungsgemäßen Schaltung zur Simulation eines neuronalen Netzwerkes. Der Schaltung werden als Eingangssignale (ES) Binärwörter mit einer beliebigen Wortbreite in zeitlicher Abfolge nacheinander zugeführt. Diese Abfolge von Binärwörtern bestimmt den Takt der Synchronisationseinheit (SYN) bei der Ansteuerung der Speicher. Die einen Zahlenwert repräsentierenden Binärwörter werden außerdem der Recheneinheit (RE) zugeführt.
In der Recheneinheit werden die Eingangssignale (Binärwörter) mit den aus dem Gewichtungsspeicher (GS) abgerufenen Gewichtungsfaktoren multipliziert. Anschliessend werden die gewichteten Eingangssignal im Ausgangsspeicher aufsummiert. Bei dieser Operation wird in zwei Speichern der Recheneinheit jeweils der höchste und zweithöchste aufsummierte Betrag festgehalten (abgespeichert). Dabei wird auch die Ausgangsbedeutungen desjenigen Elementes des Ausgangsspeichers festgehalten, in dem dieser Höchstbetrag aufsummiert wurde. Nachdem alle Eingangssignale in dieser Weise abgearbeitet wurden, steht die Ausgangsbedeutung derjenigen Speicherzelle fest, die den höchsten Wert enthält (= Gewinnerneuron). Die Differenz zwischen dem aufsummierten Höchstwert und dem zweithöchsten Wert zeigt an, mit welchem Vorsprung sich ein Gewinnerneuron qualifiziert hat und ermöglicht, hierfür bestimmte Mindestanforderungen festzulegen.
**Fig. 4** zeigt die zeitliche Abfolge und Zuordnung der seriellen Eingangssignale zu den im Gewichtungsspeicher gespeicherten Gewichtungsfaktoren. Die Zeichnung zeigt den Ausgangsspeicher (AS) und den in die Segmente SEG1,2,3 ..n aufgeteilten Gewichtungsspeicher (GS), bei dem jedes Segment die selbe Anzahl von Speicherelementen umfasst wie der gesamte Ausgangsspeicher (AS). Die Eingangssignale (ES) werden den Segmenten des Gewichtungsspeichers entsprechend ihrer zeitlichen Abfolge zugeordnet. Beim Eingang des ersten Signals (ES 1) wird durch die Synchronisationseinheit das erste Speicherelement im 1. Segment des Gewichtungsspeichers aktiviert, um den dort gespeicherten Gewichtungsfaktor auszulesen. Gleichzeitig wird von der Synchronisationseinheit das erste Speicherelement des Ausgangsspeichers aktiviert, um dort das gewichtete Eingangssignal zu inkremetieren. In der Folge werden alle übrigen Speicherelemente des 1.Segments und im Gleichtakt alle übrigen Speicherelemente des Ausgangsspeichers angesteuert. Dieser gesamte Vorgang vollzieht sich während der Präsenz des ersten Eingangssignals (ES 1). Mit dem Eingang des zweiten Signals (ES 2) steuert die Synchronisationseinheit das erste Speicherelement im 2. Segment des Gewichtungsspeichers und gleichzeitig wieder das erste Speicherelement des Ausgangsspeichers (AS) an. Mit dem Eingang eines neuen Signals wird im Gewichtungsspeicher also jeweils das nächste Segment angesteuert, während die Ansteuerung des Ausgangsspeichers wieder auf den Anfang zurückgesetzt wird. Der Synchronisationseinheit ist hierbei nur vorzugeben, wie viele Speicherelemente ein Segment des Gewichttungsspeichers umfasst. Diese Anzahl ist identisch mit den im Ausgangsspeicher verwendeten Speicherelementen.
**Fig. 5a** zeigt ein Ausführungsbeispiel für die erfindungsgemäße Schaltung zur Simulation neuronaler Netzwerke. Im Ausführungsbeispiel mögen einem Bildwandler unterschiedliche Bildmuster zugeführt werden. Der besseren Übersicht halber soll dieser Bildwandler aus nur 16 Bildpunkten (Pixels) bestehen und es sollen nur 3 Bildmuster (BM1-BM3) erkannt (klassifiziert) werden. Das Bild wird entsprechend der Pfeilmarkierung Punkt für Punkt und Zeile für Zeile abgetastet, wobei einem Bildpunkt bei Überschreiten einer bestimmten Helligkeitsschwelle das Signal 1 zugeordnet wird. In Fig.5a weisen die einzelnen Bildpunkte jeweils die von ihnen abgegebenen Signale aus. Hieraus können die Gewichtungsfaktoren in der Weise abgeleitet werden, dass bei einem Bildpunkt, für den ein bestimmtes Bildmuster ein aktives Signal ausweist, auch der zuzuordnende Gewichtungsfaktor einen relativ hohen Wert erhält. Der Bereich und die Abstufung der Gewichtungsfaktoren kann dabei beliebig festgelegt werden. Die einfachste Abstufung erhält man bei Beschränkung der Gewichtungsfaktoren auf die Werte "0" und "1".

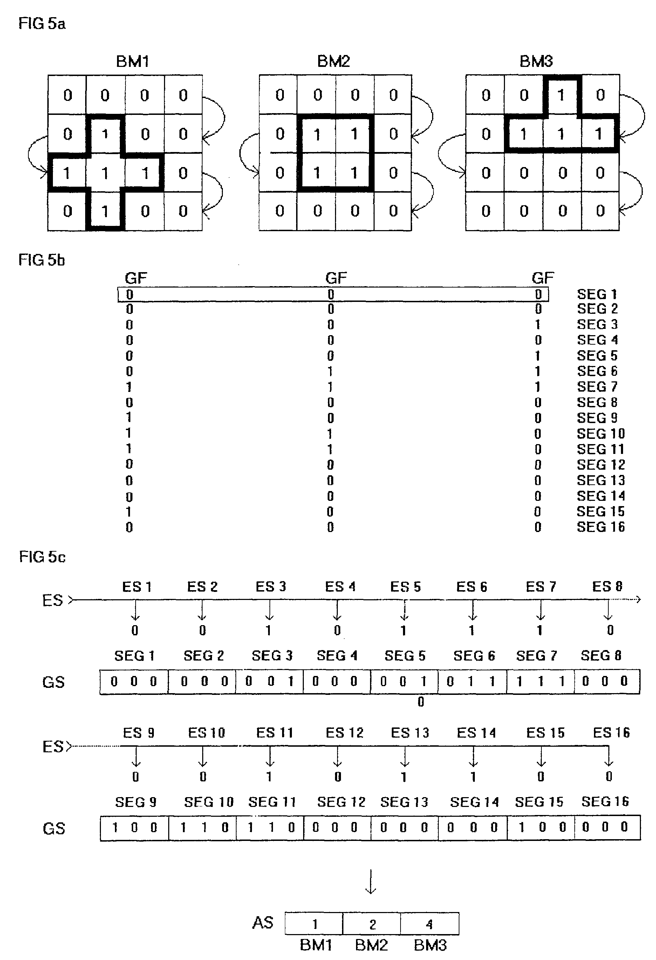

**Fig. 5b** zeigt die sich dabei ergebenden Gewichtungsfaktoren (GF) für jede der drei Musterbedeutungen. Die demselben Eingangssignal (ES) zuzuordnenden Gewichtungsfaktoren bilden dabei ein Segment (SEG). Im Beispielsfall sind die Gewichtungsfaktoren mit den Signalen der Bildmuster identisch, weil sowohl die Bildmustersignale als auch die Gewichtungsfaktoren durch die Werte "0" und "1" dargestellt werden. Eine Erweiterung der Gewichtungsmöglichkeiten ist durch die Verwendung negativer Werte (z.B. von -1 bis +1) möglich. Die Abstufung kann dabei ganzzahlig (+1, 0,-1) oder in anderer beliebiger Weise (z.B. +1, +0.5, 0, -0.5, -1) erfolgen. Zweckmäßig ist die Abstufung der Gewichtungsfaktoren entsprechend der binären Darstellung eines Zahlenwertes. So kann ein Speicherelement mit einer Wortlänge von 4 Bit in der Weise aufgeteilt werden, dass durch 1 Bit das Vorzeichen und durch 3 Bits eine Dezimalzahl von null bis sieben dargestellt wird
Eine weitere Möglichkeit ist die Simulation der Funktion "hemmender Synapsen". Dies bedeutet, dass ein aktives Signal in der Weise "gewichtet" wird, dass die einer bestimmten Ausgangsbedeutung zugewiesenen und aufsummierten Gewichtungsprodukte auf den Wert null zurück gesetzt werden und durch eine Markierung (Flag) verhindert wird, dass dem betreffenden Element des Ausgangsspeichers weitere Werte zugewiesen werden. Diese Blockierung einer Ausgangsbedeutung kann dergestalt erfolgen, dass ein Bit des betreffenden Speicherelements für eine solche Markierung reserviert wird. Eine andere Möglichkeit besteht darin, dass jedes Element des Ausgangsspeichers eine geringe positive Voreinstellung erhält und eine Aufsummierung weiterer Gewichtungsprodukte nur dann erfolgt, wenn diese Voreinstellung nicht gelöscht ist. Zu erwähnen ist an dieser Stelle, dass eine solche zielorientierte Festlegung der Gewichtungsfaktoren vor allem bei Aufgaben der Mustererkennung erfolgen wird. Bei anderen Einsatzgebieten neuronaler Netzwerke ist es dagegen sinnvoll, sich die Fähigkeit neuronaler Netzwerke zum selbständigen Lernen zunutze zu machen, indem z.B. mit einem als "back-propagation" bezeichneten Trainingsverfahren Gewichtungen, die zur Aktivierung der gewünschten Ausgangsbedeutung geführt haben, verstärkt und Gewichtungen, die zur Aktivierung von nicht gewünschten Ausgangsbedingungen geführt haben, geschwächt werden.
In **Fig. 5c** werden der erfmdungsgemäßen Schaltung die Eingangssignale ES 1- ES 16 des Bildmusters BM1 zugeführt. Diese Signale werden mit den für die Bildmuster BM1, BM2 und BM3 spezifischen Gewichtungsfaktoren gewichtet und das Ergebnis dieser Gewichtung im Ausgangsspeicher AS aufsummiert. Hierbei ergibt sich ein Höchstwert in Speicherelement 3 des Ausgangsspeichers (AS), das die Ausgangsbedeutung BM3 repräsentiert.

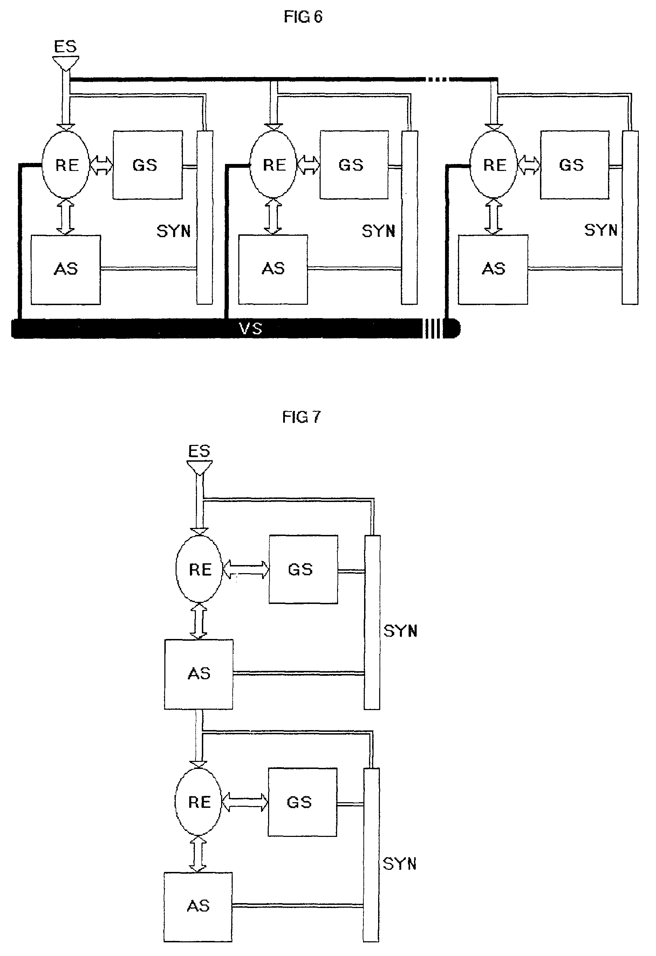

**Fig. 6** zeigt eine Parallelanordnung mehrerer erfindungsgemäßer Schaltungen zur Simulation eines neuronalen Netzwerkes. Durch eine solche Parallelanordnung werden die jeweils anliegenden Eingangssignale gleichzeitig (parallel) mit mehreren Gewichtungsfaktoren aus mehreren Gewichtungsspeichern (GS) in mehreren Rechenwerken (RW) multipliziert und die jeweiligen Produkte in mehreren Ausgangsspeichern (AS) aufsummiert. Die durch den Ausgangsspeicher repräsentierte neuronale Ausgangsschicht ist hierbei also in mehrere Bereiche (Ausgangsspeicher) aufgeteilt. Ebenso sind die den einzelnen Elementen des Ausgangsspeichers zuzuordnenden Gewichtungen auf mehrere Gewichtungsspeicher (GS) aufgeteilt. Diese Aufteilung erfolgt lediglich softwaremäßig durch die Aufteilung der Gewichtungsfaktoren auf die verschiedenen Gewichtungsspeicher und der Zuordnung von Ausgangsbedeutungen auf die Elemente der verschiedenen Ausgangsspeicher. Funktionell arbeitet jede Schaltung völlig selbständig und unabhängig. Eine Konsolidierung der einzelnen Schaltungen erfolgt lediglich dadurch, dass durch eine weitere Vergleichsschaltung (VS) ermittelt wird, welches Speicherelement der verschiedenen Ausgangsspeicher den höchsten Wert enthält und damit als Gewinnerneuron gilt. Hierzu müssen lediglich die in den einzelnen Rechenwerken zwischengespeicherten Höchstwerte der einzelnen Ausgangsspeicher verglichen werden.

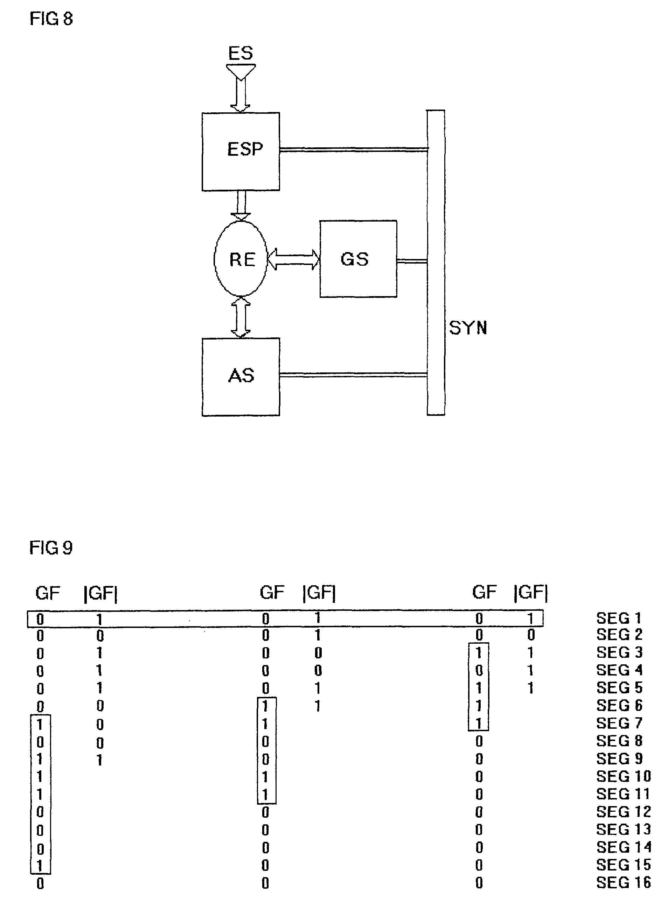

**Fig. 7** zeigt eine Schaltung zur Simulation mehrschichtiger neuronaler Netzwerke. Ein mehrschichtiges neuronales Netzwerk weist zwischen der Eingangsschicht und der Ausgangsschicht zwei oder mehrere Zwischenschichten aus, deren Neuronen die eingehenden Impulse ebenfalls gewichten, verarbeiten und an die Ausgangsschicht oder eine weitere Zwischenschicht weiterleiten. Die Simulation solcher mehrschichtiger neuronaler Netzwerke erfolgt erfindungsgemäß dadurch, dass zwei oder mehrere erfindungsgemäße Schaltungen nach Fig.3 in Serie geschaltet werden und die aus dem Ausgangsspeicher der ersten Schaltungseinheit abgerufenen Datensignale als Eingangssignale der nachfolgenden Schaltungseinheit fungieren. Dabei ist die zeitliche Abfolge der Signale so abzustimmen, dass im (Ausgangs-)Speicher der ersten erfindungsgemäßen Schaltung zur Simulation eines einstufigen neuronalen Netzwerkes alle gewichteten Eingangssignale aufsummiert werden. Nach Abschluss dieser Aufsummierung werden die in den Speicherelementen des Ausgangsspeichers (AS) aufsummierten Werte entsprechend ihrer physikalischen oder numerischen Abfolge abgerufen und als Eingangssignale der nachfolgenden Schaltungseinheit zugeführt.

**Fig. 8** zeigt das Blockschaltbild einer erfindungsgemäßen Schaltung, der ein Eingangsspeicher (ESP) vorgeschaltet ist. Der Eingangsspeicher repräsentiert die Inputschicht eines festverdrahteten neuronalen Netzwerkes. Er ist nur für solche Anwendungen erforderlich, bei denen die Eingangssignale nicht unmittelbar verarbeitet werden können. Dies könnte dann der Fall sein, wenn die Abfolge der Eingangssignale zu schnell ist. Die Speicherung der Eingangssignale ermöglicht aber auch, diese mehrmals zu verarbeiten und hierbei die Bearbeitungsparameter zu variieren. Dieses Erfordernis kann sich bei der zu Fig. 9 beschriebenen positionsunabhängigen Mustererkennung ergeben, wenn der Beginn des zu identifizierenden Musters nicht genau bestimmt werden kann und deshalb mehrere Alternativen zu testen sind.

**Fig. 9** zeigt, in welcher Weise die Gewichtungen zu modifizieren sind, um mit der erfindungsgemäßen Schaltung eine positionsunabhängige Mustererkennung zu ermöglichen. Während bei dem in Fig.5 gezeigte Anwendungsbeispiel eine Mustererkennung nur möglich ist, wenn das zu identifizierende Muster auf dem Bildwandler (Gesamtbild) eine bestimmte Position einnimmt, können bei einer modifizierten Belegung des Gewichtungsspeichers (GS) auch Muster (Figuren) erkannt werden, die auf dem Bildwandler (Gesamtbild) eine beliebige Position einnehmen. Hierzu sind aus den in Fig. 5b gezeigten Gewichtungen zur Identifizierung der Bildmuster BM1, BM2 und BM3 nur diejenigen Gewichtungsfaktoren |GF| zu selektieren, die sich auf die zu identifizierende Figur beziehen, während alle Gewichtungsfaktoren, die den umgebenden Bildpunkten zugeordnet sind, unberücksichtigt bleiben.
Neben dieser Selektion der maßgeblichen Gewichtungsfaktoren ist durch die Synchronisationseinheit (SYN) die Zuordnung dieser Gewichtungsfaktoren zu den Eingangsimpulsen in der Weise vorzunehmen, dass die Ansteuerung der Gewichtungsfaktoren nicht mit dem ersten Eingangssignal beginnt, sondern erst mit dem ersten **aktiven** Eingangssignal, d.h. durch ein Signal, aus dessen Merkmalen erkennbar ist, dass es den Beginn des zu identifizierenden Musters darstellt.

Die in den Anwendungsbeispielen der Fig. 5 und 8 gezeigte Fähigkeit der erfindungsgemäßen Schaltung zur Identifizierung spezifischer Datenstrukturen ist natürlich nicht auf Daten beschränkt, die bildhafte oder optische Darstellungen repräsentieren. Sie ist vielmehr auf alle Binärcodes anwendbar, unabhängig davon, ob sie für optische, akustische, messtechnische, kombinatorische oder sonstige Funktionen codieren. Damit eröffnet die erfindungsgemäße Schaltung zur Simulation neuronaler Netzwerke sowohl Entwicklern als auch Anwendern eine sehr einfache, klar strukturierte und übersichtliche Schaltung, die mit der Technologie der von-Neumann-Rechner voll kompatibel ist und mit diesen deshalb ohne grösseren Aufwand kombiniert werden kann. Darüber hinaus kann die erfmdungsgegemäße Schaltung auf dem Gebiet der Regelung und Steuerung Anwendung finden und somit auf jenen Gebieten eingesetzt werden, bei denen der Einsatz einer Mikroprozessorschaltung zu aufwendig ist.
Hauptmerkmal und Vorteil der erfindungsgemäßen Schaltung liegen jedoch in der Geschwindigkeitssteigerung, die daraus resultiert, dass keine Speicher mit wahlfreiem Zugriff benötigt werden, sondern jeweils die schnellsten Speichertechnologien verwendet werden können.

## Patentansprüche

1. Schaltungsanordnung zur Simulation neuronaler Netzwerke **dadurch gekennzeichnet, dass**
- die ein bestimmtes Eingangsmuster repräsentierenden Eingangssignale (ES) in einer Recheneinheit (RE) mit den aus einem Gewichtungsspeicher (GS) abgerufenen Gewichtungsfaktoren (GF) multipliziert (gewichtet) werden und die Produkte dieser Gewichtung (GP) in einem die Ausgangsbedeutungen repräsentierenden Ausgangsspeicher (AS) aufsummiert werden,
- jedes einzelne serielle Eingangssignal während seiner Verweildauer mit derjenigen Anzahl von Gewichtungsfaktoren multipliziert (gewichtet) wird, die der Anzahl der Speicherelemente des Ausgangsspeichers (= Ausgangsbedeutungen) entspricht, wobei deren Anzahl frei bestimmbar ist,
- die bei der Gewichtung erforderliche Zuordnung der Gewichtungsfaktoren (GF) zu den einzelnen seriellen Eingangssignalen dadurch erfolgt, dass während der Verweildauer eines jeden einzelnen seriellen Eingangssignals die erforderliche Anzahl von Gewichtungsfaktoren (GF) in festgelegter Reihenfolge aus dem Gewichtungsspeicher (GS) abgerufen wird,
- die Zuordnung der Gewichtungsprodukte (GP) zu den einzelnen Elementen des Ausgangsspeichers (AS) dadurch erfolgt, dass die einzelnen Elemente des Gewichtungsspeichers und des Ausgangsspeichers synchron und in festgelegter Reihenfolge angesteuert bzw. aktiviert werden,
- bereits beim Aufsummieren der gewichteten Eingangssignale (Produkte) die höchste und zweithöchste Summe mit der Kennung der diese aufnehmenden Speicherelemente im Rechenwerk zwischengespeichert werden.

2. Schaltungsanordnung nach einem der vorstehenden Ansprüche, bei der die Eingangssignale (ES) gleichzeitig durch mehrere dieser Schaltungen bearbeitet werden und bei dem die Outputschicht durch die Gesamtheit der Ausgangsspeicher (AS) repräsentiert wird.

3. Schaltung nach einem der vorgenannten Ansprüche, bei dem mehrere dieser Schaltungen mehrstufig angeordnet sind und der Ausgangsspeicher die Funktion einer neuronalen Zwischenschicht erfüllt, indem die dort aufadierten Speicherwerte abgerufen und als Eingangssignale einer weiteren Schaltung nach vorgenannten Ansprüchen zugeführt werden.

4. Schaltung nach einem der vorgenannten Ansprüche, der ein Eingangsspeicher (ESP) vorgeschaltet ist, um die zu verarbeitenden parallelen oder seriellen Eingangssignale zwischenzuspeichern.

5. Schaltung nach einem der vorgenannten Ansprüche, bei der sowohl die Gewichtungen als auch die durch die Synchronisationseinheit (SYN) geregelte Zuordnung von Eingangssignalen zu den Gewichtungsfaktoren in der Weise erfolgt, dass die Position des zu klassifizierenden Bildmusters keinen Einfluss auf den Erkennungsvorgang besitzt.
